# EUROPEAN PATENT SPECIFICATION

(11) **EP 0 610 010 B1**
(45) Date of publication and mention of the grant of the patent: **02.09.1998**
(21) Application number: 94300523.1
(22) Date of filing: 25.01.1994
(51) Int. Cl.: C11D 3/39, C11D 17/00

(54) **Liquid compositions comprising bleaching agents of low aqueous solubility**
Flüssige Zusammensetzungen enthaltend Bleichmittel mit geringer Wasserlöslichkeit
Compositions liquides contenant des agents de blanchiment ayant une faible solubilité dans l'eau

(30) Priority: 02.02.1993 GB 9302015
(43) Date of publication of application: 10.08.1994
(73) Proprietor: UNILEVER PLC, London EC4P 4BQ (GB); UNILEVER N.V., 3013 AL Rotterdam (NL)
(72) Inventor: Revell, Patricia, Unilever Research, Bebington, Wirral, Merseyside L63 3JW (GB)
(74) Representative: Elliott, Peter William

(56) References cited:
- EP-A- 0 259 249
- EP-A- 0 432 062
- EP-A- 0 442 549
- FR-A- 2 397 841

## Description

### Technical Field

The present invention relates to improvements in bleaching and hygiene compositions and will be described with particular reference to bleaching and hygiene compositions for use on hard surfaces such as ceramics, plastics and metals. The specification relates generally to compositions which contain bleaching agents of low aqueous solubility.

### Background to the Invention

For many years it has been known to employ hydrogen peroxide as a water soluble bleaching and hygiene agent. To a lesser extent, other peroxides such as sodium peroxide have been employed, as have soluble peracids, such as peracetic acid, either as such or as precursors such as tetra acetyl ethylene diamine, as well as performic acid and potassium mono persulphate.

Aqueous-insoluble or sparingly soluble peracids have also been investigated with particular reference to their use in fabric bleaching compositions and in machine dishwashing applications. If such compositions are formulated as liquids, a thickening agent must be present in order to suspend the insoluble or sparingly soluble bleaching agent.

US patent 3996152 discloses stable low-pH gels containing almost insoluble peroxyacid bleach particles in a non-starch thickening agent. Aqueous suspensions of diperoxydodecanedioic acid (DPDA) are known for use as pourable bleaching compositions from EP 0176124. Another form of DPDA suspension useful as an aqueous liquid bleaching composition is disclosed in EP 0160342. DPDA is an organic peroxy acid, relatively stable to decomposition, odourless and particularly effective as an anti-bacterial hygiene agent as compared with hydrogen peroxide, but suffers from the disadvantage that it can explode if crystallised in relatively pure form.

European patent application EP 0160342 (Unilever, 1984) discloses aqueous liquid bleaching compositions containing organic peroxyacid particles having a solubility of less than about 1% in water, suspended in an acidic surfactant-structured liquid containing alkyl benzene sulphonate and electrolyte: the preferred peroxy acid being DPDA. It is believed that the combination of alkyl benzene sulphonate and electrolyte forms a lamellar-dispersion thickening system which suspends the almost insoluble DPDA particles.

EP 0435379 (AKZO, 1989) relates to the use of imidoperoxycarboxylic acids in bleaching compositions in soaking detergents and dishwashing detergents. Preferred compositions include e-N-N-phthaloyl-amino-peroxy-caproic acid (PAP) and DPDA, as mentioned above. PAP is less explosive that DPDA and has comparable stability to decomposition. PAP is slightly less effective as a hygiene agent than DPDA on a weight for weight basis. The solubility of PAP at 10 Celcius in pure water is around 58ppm. The formulations of EP 0435379 comprise 0.1-35%, preferably 2-10%wt sulphate and 0.5-40%wt, preferably 2-20%wt of the alkyl benzene sulphonic acid as a suspending surfactant system.

EP 442549 (Unilever, 1990) discloses use of PAP as a bleaching agent in combination with secondary alkyl sulphonate and fatty acid as a bleach stable suspending surfactant system. The compositions of EP 442549 suffer from the disadvantage that on storage white, needle-like crystals form in the composition and can be thrown down as a sediment. This leads of a loss of homogeneity in the composition and presents dosing problems. The presence of crystals can abrade or scratch surfaces which are cleaned with the composition. Moreover, users can believe that the crystal-containing product has decomposed and discard the unused product, unnecessarily releasing the compound into the environment.

EP 0432062 discloses aqueous microemulsions which contain water insoluble organic liquids (for example aromatic hydrocarbons) and other water insoluble organic materials. Examples of these water insoluble organic materials include a range of hygiene agents, none of which are bleaching agents.

FR 2397841 discloses a disinfectant liquid which comprises a hygiene agent (phenolic derivative) and a water insoluble solvent (pine oil).

EP 0259249 discloses a biocidal composition for the skin and hands which comprises a hygiene agent and surfactants.

From the above it can be seen that the sparingly soluble peracids are desirable bleaching and hygiene agents, but suffer from the disadvantage of their low solubility in water. While suspending systems can be employed to deliver the peracids at higher levels, products which employ suspending systems are of increased viscosity and often contain visible particles or become cloudy.

### Brief Description of the Invention

We have now determined that stable, aqueous, hygiene compositions comprising aqueous-insoluble or sparingly soluble organic peroxy acids can be prepared by the use of a water-immiscible solvent for the organic peroxy acid in the form of an emulsion in water. In the context of the present invention aqueous-insoluble or sparingly soluble organic peroxy acids are those peroxy acids having a solubility in water at 10°C of less than 100ppm.

### Detailed Description of the Invention

According to a first aspect of the present invention there is provided an aqueous bleaching composition comprising:
a) at least 100 ppm of an organic peroxyacid bleaching agent having a solubility in water at 10°C of less than 100 ppm.
b) at least 0.1% of a water-immiscible solvent for (a), said solvent comprising the dispersed phase of a solvent/water emulsion.

According to a second aspect of the present invention there is provided a method of bleaching a substrate which comprises treating the substrate with a composition according to any one of claims 1-16.

Typically, the peroxy acid is an imido peroxy-carboxylic acid, most preferably e-N-N-phthaloyl-amino-peroxycaproic acid (PAP). PAP exhibits both bleaching and hygiene activity.

Other peroxy-carboxylic acids, are known as described above and from a publication entitled "TAED and new peroxycarboxylic acids as highly efficient bleach systems", 80th AOCS Meeting, Cincinnati OH, May 1989.

Preferably, the composition further comprises a surfactant. Preferred surfactants are selected from the group of anionic and nonionic surfactants, and are preferably mixtures of nonionic and anionic surfactant.

In preferred embodiments of the invention the anionic surfactant has an 8-20 carbon hydrophobic group and a head group selected from sulphonates, sulphates and carboxylates.

In preferred embodiments of the invention the nonionic surfactant is an ethoxylated nonionic surfactant. The preferred ethoxylated surfactants are nonionic alcohol ethoxylates. Preferably these comprise a mixture of materials of the general formulation:

R- (OCH₂CH₂)ₘ-OH

wherein R is straight or branched C₈ to C₁₈ alkyl, and wherein the average degree of ethoxylation m is 2-20, more preferably 3-12.

Typically, the surfactant system will comprise 1-10% of the composition and preferably comprises nonionic and anionic surfactants in a ratio of from 1:10 to 10:1. More preferably, the anionic surfactant is present in excess.

The solvent (b) is preferably a water immiscible tertiary alcohol. Tertiary alcohols are unreactive towards peroxy hygiene agents such as (a). Most preferred amongst the tertiary alcohols are those having more than 5 carbon atoms, the most preferable being 2-methyl hexan-2-ol. Suitable levels of solvent range from 1-10%wt on product.

Where the bleaching agent is relatively unreactive, a wider range of solvents can be employed, provided that they form emulsions in water. Where compatible with the bleaching agent, suitable solvents include limonene, and other solvents as mentioned in EP 0316726 A2 (Colgate-Palmolive Company: pub. 1989).

In particularly preferred embodiments of the invention, the emulsion of the solvent and water is a microemulsion.

Microemulsion based cleaning compositions have been disclosed in European Patent specifications 0137615, 0137616 and 0160762 and in US patents 4561991, 3723330, 4472291 and 4540448. In the absence of an opacifying component microemulsions according to the present invention are clear, mobile liquids.

In microemulsion embodiments of the invention it is preferable that a co-surfactant is present. The nature and use of suitable co-surfactants are described in EP 0316726 A2. It is believed that the co-surfactant reduces the interfacial tension at the boundary between the continuous and dispersed phase of the emulsion. In embodiments of the invention the emulsions have a continuous aqueous phase and a dispersed non-aqueous phase.

Preferred co-surfactants are selected from the group comprising polyalkylene glycol and monoalkyl glycol ethers. Ethers based on dipropylene glycol, particularly the butyl and isobutyl ether are preferred. Dipropylene glycol, particularly the butyl ether is commercially available as Butyl Digol [RTM].

Preferred compositions according to the invention comprise a clear microemulsion having a continuous, surfactant-containing, aqueous phase and a dispersed, non-aqueous, water immiscible solvent, said solvent being unreactive towards organic peroxy acids and having an organic peroxy acid dissolved therein.

Particularly preferred compositions according to the present invention comprise:
a) 100-10000ppm e-N-N-phthaloyl-amino-peroxycaproic acid,
b) 0.1-10%wt of a surfactant system comprising:
   i) an ethoxylated nonionic surfactant, with an ethoxylation level of 3-12, and,
   ii) an anionic surfactant having an 8-20 carbon hydrophobic group and a head group selected from sulphonates, sulphates and carboxylates,
c) 0.1-10% polyalkylene glycol ether co-surfactant, and,
d) 0.1-10% of tertiary alcohol having more than five carbon atoms.

Preferably, the composition further comprises a transition metal complexing stabilizer selected from phosphates, phosphonic acids or phosphonates, stannates, and carboxylates.

Preferred metal ion complexing agents are selected from dipicolinic acid, ethylene diamine tetra acetic acid (EDTA) and its salts, hydroxy-ethylidene diphosphonic acid (Dequest 2010, RTM), ethylene diamine tetra (methylene phosphonic acid) (Dequest 2040, RTM), diethylene triamine penta(methylene phosphonic acid) (Dequest 2060, RTM). It is believed that the presence of the above-mentioned stabilisers improves the stability of the compositions by complexing transition metal ions which would otherwise promote the decomposition of the organic peroxy acid.

In order that the present invention may be further understood it will be illustrated hereafter by way of example.

### EXAMPLES

Formulations were prepared as described below in Table 1. The materials are identified as follows:
- PAP: e-N-N-phthaloyl-amino-peroxycaproic acid (ex. Ausimont): organic peroxy acid,
- SOL: 2-methyl hexan-2-ol: tertiary alcohol solvent for PAP,
- NON: Synperonic 91-7T [RTM] (ex. ICI) alcohol ethoxylate: nonionic surfactant.
- LDS: MARLON AS3 [RTM] Linear dodecylbenzene sulphonic acid: anionic surfactant.
- MgO: Magnesium Oxide.

### Example 1

Excess of PAP was mixed with the tertiary alcohol to obtain a saturated solution at room temperature. The solution was filtered through a 2 micron paper filter to remove excess PAP and thereby obtain a clear solution of PAP in solvent. The solution was combined with the other ingredients as listed in Table 1 below, neutralising the LDS with the MgO and adding NON and BuD before adding the solution of PAP in SOL.

The resulting mixture was stirred with moderate vigour until a clear product was obtained.

When this product was cooled to 10°C, no visible sediment of PAP was thrown down. The product was filtered at 10°C to remove any particles present (using a 2 micron paper filter) and warmed to room temperature. The resulting product was clear.

The level of PAP in the final product was determined by titration under acidic conditions against thiosulphate/KI at 0°C. The level of PAP in the overall product was determined to be 155ppm, this is noted to be well above the 58ppm aqueous solubility of PAP mentioned above.

## Claims

1. An aqueous bleaching composition comprising:
a) at least 100 ppm of an organic peroxyacid bleaching agent having a solubility in water at 10°C of less than 100 ppm.
b) at least 0.1% of a water-immiscible solvent for (a), said solvent comprising the dispersed phase of a solvent/water emulsion.

2. Composition according to claim 1 wherein the bleaching agent (a) is an organic imido peroxy acid.

3. Composition according to claim 2 wherein the organic peroxy acid is e-N-N-phthaloyl-amino-peroxy-caproic acid.

4. Composition according to claim 1 further comprising surfactants are selected from the group of anionic and nonionic surfactants and mixtures of nonionic and anionic surfactants.

5. Composition according to claim 4 comprising an anionic surfactant having an 8-20 carbon hydrophobic group and a head group selected from sulphonates, sulphates and carboxylates.

6. Composition according to claim 4 comprising an ethoxylated nonionic surfactant.

7. Composition according to claim 6 wherein the ethoxylated nonionic surfactant comprises a mixture of materials of the general formulation:
R- (OCH₂CH₂)ₘ-OH
wherein R is straight or branched C₈ to C₁₈ alkyl, and wherein the average degree of ethoxylation m is 2-20.

8. Composition according to claim 1 wherein the solvent (b) is a water immiscible tertiary alcohol.

9. Composition according to claim 8 wherein the tertiary alcohol has more than 5 carbon atoms.

10. Composition according to claim 1 in the form of a micro-emulsion.

11. Composition according to claim 10 further comprising a co-surfactant.

12. Composition according to claim 3 comprising:
a) 100-10000ppm e-N-N-phthaloyl-amino-peroxycaproic acid,
b) 0.1-10%wt of a surfactant system comprising:
i) an ethoxylated nonionic surfactant, with an ethoxylation level of 3-12, and,
ii) an anionic surfactant having an 8-20 carbon hydrophobic group and a head group selected from sulphonates, sulphates and carboxylates,
c) 0.1-10% polyalkylene glycol ether co-surfactant, and,
d) 0.1-10% of tertiary alcohol having more than five carbon atoms.

13. A method of bleaching a substrate which comprises treating the substrate with a composition according to any one of claims 1-12.

## Patentansprüche

1. Eine wässerige Bleichzusammensetzung, enthaltend:
(a) Zumindest 100 ppm eines organischen Peroxysäure-Bleichmittels mit einer Löslichkeit in Wasser bei 10°C von weniger als 100 ppm;
(b) zumindest 0,1 % eines mit Wasser nichtmischbaren Lösungsmittels für (a), wobei das Lösungsmittel die dispergierte Phase einer Lösungsmittel/Wasser-Emulsion umfaßt.

2. Eine Zusammensetzung nach Anspruch 1, worin das Bleichmittel (a) eine organische Imidoperoxysäure ist.

3. Eine Zusammensetzung nach Anspruch 2, worin die organische Peroxysäure e-N-N-Phthaloylaminoperoxycapronsäure ist.

4. Eine Zusammensetzung nach Anspruch 1, die ferner Surfactants enthält, ausgewählt aus der Gruppe von anionischen und nichtionischen Surfactants und Mischungen von nichtionischen und anionischen Surfactants.

5. Eine Zusammensetzung nach Anspruch 4, die ein anionisches Surfactant mit einer hydrophoben Gruppe mit 8 bis 20 Kohlenstoffatomen und eine Kopfgruppe, ausgewählt aus Sulfonaten, Sulfaten und Carboxylaten, enthält.

6. Eine Zusammensetzung nach Anspruch 4, enthaltend ein ethoxyliertes nichtionisches Surfactant.

7. Eine Zusammensetzung nach Anspruch 6, worin das ethoxylierte nichtionische Surfactant eine Mischung von Materialien der allgeminen Formel
R-(OCH₂CH₂)ₘ-OH
enthält, worin R ein geradkettiges oder verzweigtkettiges C₈₋₁₈-Alkyl ist und worin der durchschnittliche Ethoxylierungsgrad m 2 bis 20 ist.

8. Eine Zusammensetzung nach Anspruch 1, worin das Lösungsmittel (b) ein mit Wasser nichtmischbarer tertiärer Alkohol ist.

9. Eine Zusammensetzung nach Anspruch 8, worin der tertiäre Alkohol mehr als 5 Kohlenstoffatome hat.

10. Eine Zusammensetzung nach Anspruch 1 in der Form einer Mikro-Emulsion.

11. Eine Zusammensetzung nach Anspruch 10, die ferner ein Cosurfactant enthält.

12. Eine Zusammensetzung nach Anspruch 3, umfassend:
(a) 100 bis 10 000 ppm e-N-N-Phthaloylaminoperoxycapronsäure;
(b) 0,1 bis 10 Gewichtsprozent eines Surfactant-Systems, enthaltend:
(i) Ein ethoxyliertes nichtionisches Surfactant mit einem Ethoxylationsgrad von 3 bis 12, und
(ii) ein anionisches Surfactant mit einer hydrophoben Gruppe von 8 bis 20 Kohlenstoffatomen und einer Kopfgruppe, ausgewählt aus Sulfonaten, Sulfaten und Carboxylaten,
(c) 0,1 bis 10 % Polyalkylenglykolether-Cosurfactant, und
(d) 0,1 bis 10 % tertiären Alkohol mit mehr als fünf Kohlenstoffatomen.

13. Ein Verfahren zum Bleichen eines Substrats, welches das Behandeln des Substrats mit einer Zusammensetzung nach irgendeinem der Ansprüche 1 bis 12 umfaßt.

## Revendications

1. Une composition de blanchiment aqueuse contenant :
a) au moins 100ppm d'un agent de blanchiment au peroxyacide organique ayant une solubilité dans l'eau à 10 ° C inférieure à 100 ppm.
b) Au moins 0,1 % d'un solvant immiscible dans l'eau pour a), ledit solvant contenant la phase dispersée d'une émulsion solvant/eau

2. Composition selon la revendication 1, dans laquelle l'agent de blanchiment (a) est un imido peroxyacide organique.

3. Composition selon la revendication 2, dans laquelle le peroxyacide organique est de l'acide e-N-N-phthaloyl-amino-peroxycaproïque.

4. Composition selon la revendication 1, comprenant en outre des agents tensioactifs, sélectionnés parmi le groupe composé d'agents tensioactifs anioniques et non ioniques et de mélanges d'agents tensioactifs non ioniques et anioniques.

5. Composition selon la revendication 4, comprenant un agent tensioactif anionique présentant un groupe hydrophobe de 8 à 20 atomes de carbone et un groupe de tête sélectionné parmi des sulfonates, des sulfates et des carboxylates.

6. Composition selon la revendication 4 comprenant un agent tensioactif non ionique éthoxylé.

7. Composition selon la revendication 6, dans laquelle l'agent tensioactif non ionique éthoxylé comprend un mélange de matières de formulation générale suivante :
R - (OCH₂CH₂)ₘ-OH
où R est un alkyle en C₈ à C₁₈ linéaire ou ramifié et où le degré d'éthoxylation moyen m est compris entre 2 et 20.

8. Composition selon la revendication 1, dans laquelle le solvant (b) est un alcool tertiaire immiscible dans l'eau.

9. Composition selon la revendication 8, dans laquelle l'alcool tertiaire contient plus de 5 atomes de carbone.

10. Composition selon la revendication 1 sous forme d'une microémulsion.

11. Composition selon la revendication 10, comprenant en outre un co-tensioactif.

12. Composition selon la revendication 3 contenant :
a) 100 à 10 000 ppm d'acide e-N-N-phthaloyl-amino-peroxycaproïque,
b) 0,1 à 10 % en masse d'un système tensioactif contenant :
i) un agent tensioactif non ionique éthoxylé, avec un degré d'éthoxylation compris entre 3 et 12, et
ii) un agent tensioactif anionique contenant un groupe hydrophobe avec 8 à 20 atomes de carbone et un groupe de tête sélectionné parmi des sulfonates, des sulfates et des carboxylates,
c) 0,1 à 10 % d'un co-tensioactif d'éther de polyalkylène glycol,
et
d) 0,1 à 10 % d'un alcool tertiaire comportant plus de cinq atomes de carbone.

13. Un procédé de blanchiment d'un substrat, qui consiste à traiter le substrat avec une composition selon l'une quelconque des revendications 1 à 12.
